# EUROPÄISCHE PATENTSCHRIFT

(11) **EP 3 066 947 B1**
(45) Veröffentlichungstag und Bekanntmachung des Hinweises auf die Patenterteilung: **25.07.2018**
(21) Anmeldenummer: 16159533.5
(22) Anmeldetag: 09.03.2016
(51) Int. Cl.: A45B 17/00, A45B 23/00, E04H 15/60, F16M 11/20

(54) **SONNEN- UND WETTERSCHUTZVORRICHTUNG**
SUN AND WEATHER PROTECTION DEVICE
DISPOSITIF DE PROTECTION CONTRE LES INTEMPERIES ET LE SOLEIL

(30) Priorität: 13.03.2015 DE 202015001957 U
(43) Veröffentlichungstag der Anmeldung: 14.09.2016
(73) Patentinhaber: GLATZ AG, CH-8500 Frauenfeld (CH)
(72) Erfinder: Glatz, Gustav Adolf, 8500 Frauenfeld (CH); Kaufmann, Ernst, 8555 Müllheim (CH)
(74) Vertreter: Schmauder & Partner AG Patent- & Markenanwälte VSP

(56) Entgegenhaltungen:
- DE-A1- 2 430 234
- DE-U1- 9 204 102
- US-A- 6 123 482
- US-A1- 2002 100 852

## Beschreibung

### Technisches Gebiet

Die Erfindung betrifft eine Sonnen- und Wetterschutzvorrichtung, insbesondere einen Schirm und weitere Dachkonstruktionen.

### Stand der Technik

Neben anderen Schirmkonstruktionen sind Sonnenschirme in Form eines Trägerstabes mit Querstreben für eine Stoffbahn bekannt, beispielsweise aus CH 314 813 (Albert Glatz), CH 395 446 (Karl Strotz) und CH 501798 (Albert Glatz). Die Vorteile dieser segelartigen Sonnenschirme sind unter anderem die rechteckige Form und die Anpassbarkeit an den Sonnenstand. Nachteilig ist die aufwändige Montage der separaten Stoffbahn auf den Trägerstab. Besonders nachteilig ist es, dass für die Nachführung des Daches an den unterschiedlichen Sonnenlauf nach Standort, Jahres- und Tageszeit gemäss dem Stand der Technik mehrere Feststellvorrichtungen zu lösen und wieder fixieren sind. Nachteilig ist auch die zum Teil schwache Klemmwirkung der Feststellvorrichtungen gemäss dem Stand der Technik. In der DE 24 30 234 A1 ist eine Gelenkverbindung mit einer einzigen Klemmschraube gezeigt. Nachteilig ist bei der Gelenkverbindung der DE 24 30 234 A1 die schwache Klemmwirkung und die Mehrteiligkeit der Gelenkteile. DE9204102U1 offenbart einen Ponchoschirm welcher aus einem Poncho und einer zusätzlichen Spannvorrichtung mit einer Gelenkkombination besteht.

### Darstellung der Erfindung

Die Aufgabe der Erfindung ist es somit, die aufgezeigten Schwachstellen des Standes der Technik zu beheben und dabei den Vorteil von weniger Einzelteilen, einer höheren Klemmkraft und einer möglichst einfachen Bedienung mit nur einem Bedienelement (z.B. Klemmschraube) für alle Verstell-Richtungen zu erzielen.

Die Aufgabe der Erfindung wird durch eine Sonnen- und Wetterschutzvorrichtung, insbesondere Sonnenschirm, mit einem Standstab, einem Trägerstab und einer flexiblen Schutzfläche gemäss Anspruch 1 gelöst. Die vorgeschlagene Sonnen- und Wetterschutzvorrichtung umfasst zwei Gelenkhälften mit geschlossenen Klemmschellen und einer verzahnten Drehscheibe sowie einem Klemmbolzen und Klemmgriff. Damit können mit einem einzigen Klemmgriff alle Bewegungsrichtungen fixiert und wieder freigegeben werden, die Klemmwirkung ist erhöht und Montageaufwand sowie Bestandteilanzahl ist reduziert.

Hinsichtlich der Stabilität ist es vorteilhaft, wenn die Klemmschelle mit einem einsetzbaren Klemmflügel schliessbar ist. Um die volle Flexibilität der Sonnen- und Wetterschutzvorrichtung zu gewährleisten ist es weiterhin vorteilhaft, wenn sich der Trägerstab bei gelöster Klemmschraube in seiner Achsrichtung verschieben lässt. Vorteilhaft ist es, wenn die Drehscheiben für die Verstellung des Winkels von Standstab zu Trägerstab ineinander greifende Verzahnungen aufweisen, um damit eine formschlüssige Verbindung zu erreichen. Alternativ können die Drehscheiben für die Einstellung des Winkels von Standstab zu Trägerstab auch als Konus - zur Erzielung einer kraftschlüssigen Verbindung - ausgebildet sein.

Vorteilhafterweise sind der Träger- wie auch der Standstab in Form von Rohren ausgebildet. Dabei kann der Trägerstab - wie auch der Standstab - zur Erhöhung der Stabilität zumindest abschnittsweise eine von einem kreisrunden Aussenquerschnitt abweichenden Aussenquerschnitt aufweisen, wobei ein Gelenkteil in seinem Klemmschellenteil Übergangselemente zu dem genannten Aussenquerschnitt aufweist. Vorteilhaft sind dabei ovale, oder vieleckige Aussenquerschnitte mit oder ohne Abrundung der Ecken. Es kann aber auch ein Trägerstab - wie auch ein Standstab - zum Einsatz kommen, der zumindest abschnittsweise eine Längsnut aufweist, wobei dann zumindest ein Gelenkteil in seinem Klemmschellenteil Übergangselemente für die Längsnut aufweist. Um eine Höhenverstellung der Sonnen- und Wetterschutzvorrichtung zu gewährleisten, kann der Standstab zumindest zwei teleskopisch verschiebbare Profile aufweisen.

Zur Erhöhung der Stabilität und einer verbesserten Bedienung können gegenseitig übergreifende Zentrierhülsen um das Zentrum der Drehscheiben herum angeordnet sein.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - eine erfindungsgemässe Sonnen- und Wetterschutzvorrichtung erläutert wird. In den Zeichnungen zeigt:
- Figur 1: eine schematische Darstellung einer Sonnen- und Wetterschutzvorrichtung gemäss eines bevorzugten Ausführungsbeispiels der vorliegenden Erfindung mit dem Gelenk, in zusammengeklapptem Zustand, ohne Darstellung des Schutzdaches;
- Figur 2: eine Darstellung der Sonnen- und Wetterschutzvorrichtung gemäss Figur 1, in aufgeklapptem Zustand, mit Darstellung des Schutzdaches;
- Figur 3: eine Darstellung der Sonnen- und Wetterschutzvorrichtung gemäss Figur 1, in zusammengeklapptem Zustand, mit Darstellung des Schutzdaches
- Figur 4: eine perspektivische Darstellung der Bedienelemente der Sonnenund Wetterschutzvorrichtung gemäss Figur 1 bis 3; mit einem Gelenk gemäss einem bevorzugten Ausführungsbeispiel der vorliegenden Erfindung als zentralem Element, wobei der Trägerstab wie der Standstab eine senkrechte Richtung einnehmen;
- Figur 5: eine Darstellung des Gelenks gemäss Figur 4 als Schnittzeichnung, wobei der Trägerstab wie der Standstab eine senkrechte Richtung einnehmen;

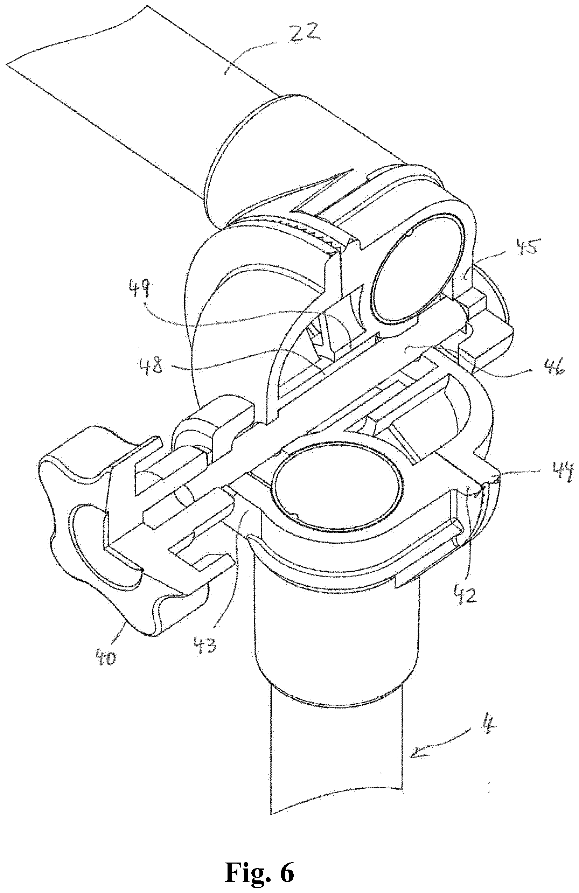

- Figur 6: eine perspektivische Darstellung des Gelenks gemäss Figur 4, wobei der Trägerstab gegenüber dem Standstab um 90° verdrehte Richtung einnimmt; und

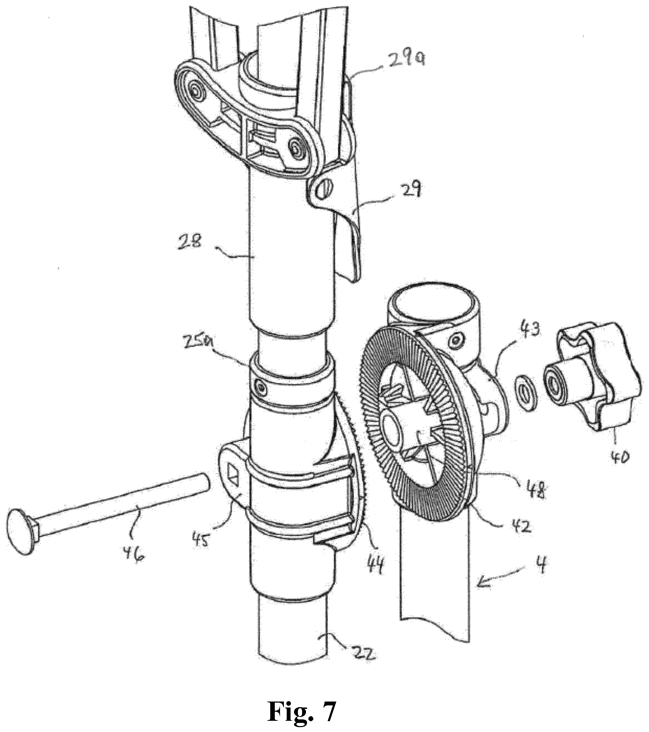

- Figur 7: eine Darstellung des Gelenks gemäss Figur 4 als Explosionszeichnung, wobei der Trägerstab wie der Standstab wiederum eine senkrechte Richtung einnehmen.

### Wege zur Ausführung der Erfindung

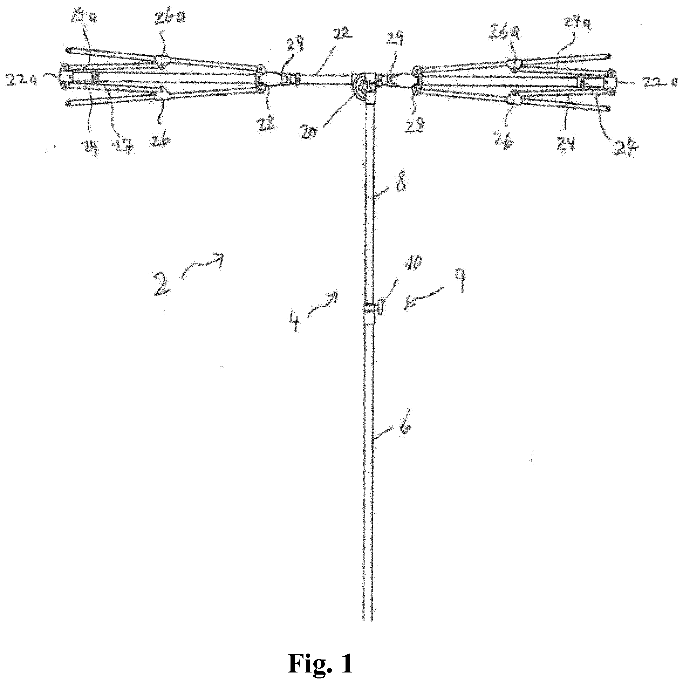

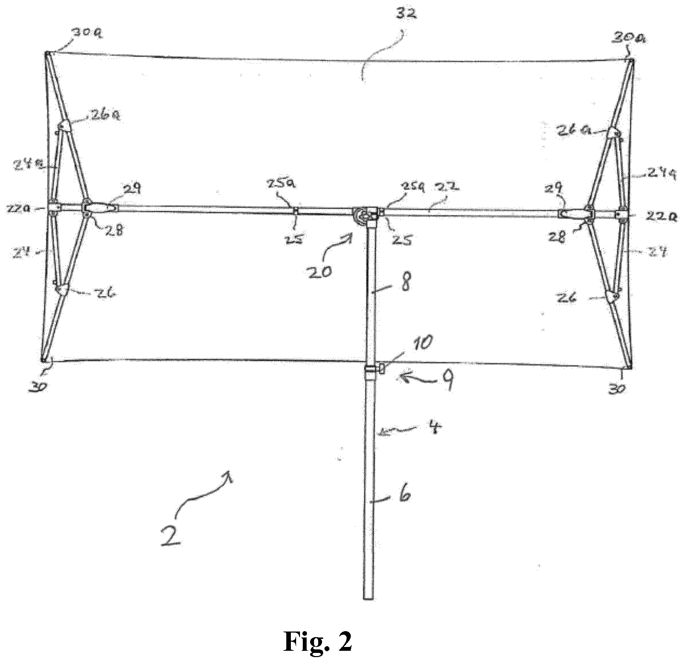

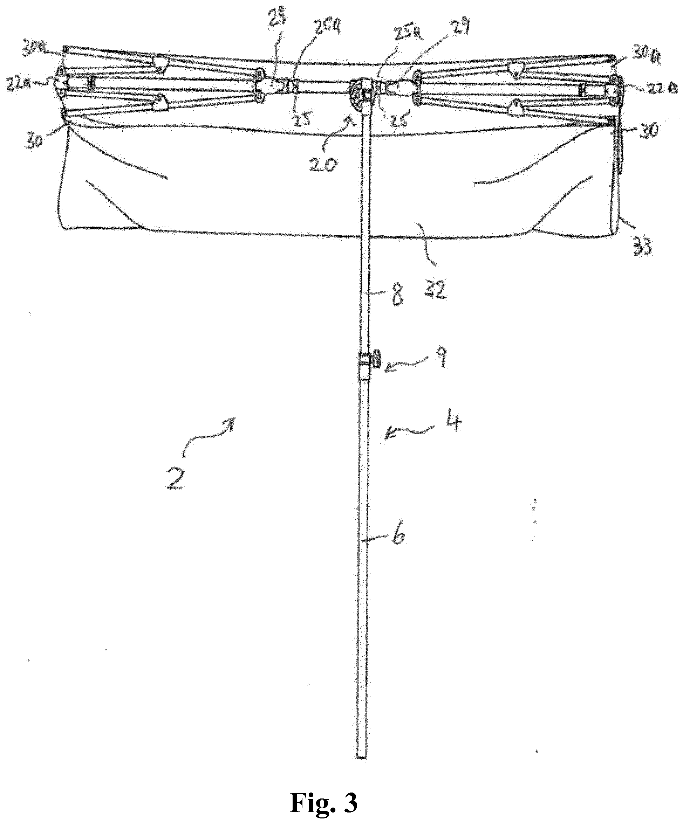

Der in den Figuren 1 bis 3 als Ganzes mit 2 bezeichnete Schirm weist einen Standstab 4 auf, der im vorliegenden Ausführungsbeispiel zwei ineinander teleskopartig verschiebbare Teilrohre 6 und 8 aufweist, die mit einer ersten Befestigungsvorrichtung 9 mit einem ersten Klemmgriff 10 arretiert und gelöst werden können.

Am oberen Ende des oberen Teilrohres 8 ist ein Gelenk 20 gemäss einem bevorzugten Ausführungsbeispiel der vorliegenden Erfindung angeordnet. Weiterhin weist der Schirm aus Figur 1 einen - in der Zeichnung waagerecht eingestellten Trägerstab 22 auf, der ebenfalls am Gelenk 20 angeordnet ist.

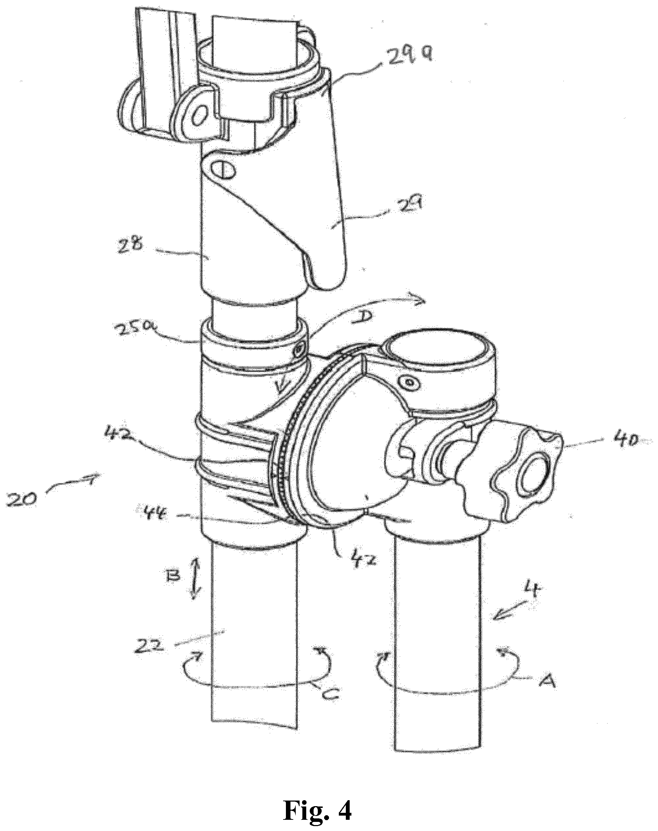

In Figur 4 ist das Gelenk 20 dargestellt, das einerseits den Standstab 4, nämlich das obere Teilrohr 8 des Standstabes, und andererseits den Trägerstab 22, bei gelöstem Klemmgriff 40, jeweils verschiebbar und bei festgestelltem Klemmgriff 40 des Gelenks 20 jeweils arretiert aufnimmt. Grundsätzlich umfasst das Gelenk 20 in diesem Ausführungsbeispiel vier Funktionen, die alle mit gelöstem Klemmgriff 40 ermöglicht und mit arretiertem Klemmgriff 40 verhindert werden, die Verdrehbarkeit A des Standstabes 4 gegenüber dem Gelenk 20, die Verschiebbarkeit B des Trägerstabes 22 im Gelenk 20, die Verdrehbarkeit C des Trägerstabes 22 um seine eigene Achse im Gelenk 20 sowie die Verdrehbarkeit D des Trägerstabes 22 gegenüber dem Standstab 4 - im Ausführungsbeispiel durch formschlüssig wirkende Verzahnungen in zwei Drehscheiben 42 und 44 im arretierten Zustand. In einem alternativen Ausführungsbeispiel - nicht gesondert dargestellt - ist die Arretierung der Verdrehbarkeit des Trägerstabes 22 gegenüber dem Standstab 4 kraftschlüssig vorzugsweise dadurch gewährleistet, dass die Drehscheiben 42 und 44 für die Einstellung des Winkels von Standstab 4 zu Trägerstab 22 als Konus ausgebildet sind. In einem weiteren alternativen Ausführungsbeispiel - nicht gesondert dargestellt - ist die Arretierung der Verdrehbarkeit des Trägerstabes 22 gegenüber dem Standstab 4 quasi gemischt form- und kraftschlüssig dadurch gewährleistet, dass die Drehscheiben 42 und 44 mit einer aufgerauten Oberfläche ausgebildet sind.

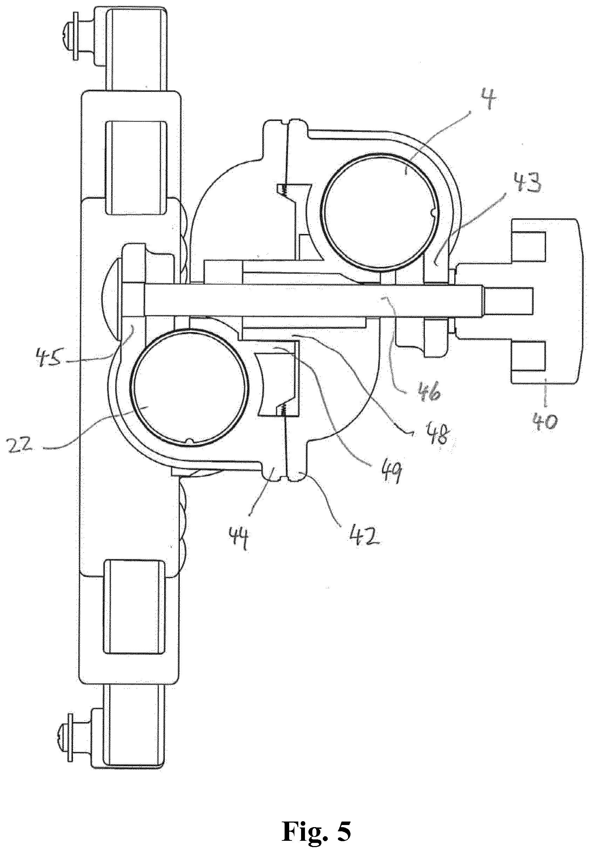

Dadurch, dass bei der vorgeschlagene Ausführungsform das Gelenk mittels zweier Gelenkhälften mit geschlossenen Klemmschellen und zwei verzahnten Drehscheiben 42, 44 - bzw. bei der oben angegebenen alternativen Ausführung aus konischen oder aufgerauten Drehscheiben - sowie einem Klemmbolzen 46 und einem Klemmgriff 40 ausgebildet ist, können mit einem einzigen Klemmgriff 40 alle Bewegungsrichtungen fixiert und wieder freigegeben werden, Die Klemmwirkung ist erhöht und Montageaufwand sowie Bestandteilanzahl ist reduziert. Im vorliegenden Ausführungsbeispiel besteht also das Gelenk 40 im Wesentlichen aus zwei Gelenkhälften in Form von Drehscheiben 42 und 44 mit integrierten Klemmschellen 43, 45 sowie einem Klemmbolzen 46 Im dargestellten Ausführungsbeispiel weist sowohl der Trägerstab 22 wie auch der Standstab 4 einen kreisrunden Aussenquerschnitt auf. In alternativen Ausführungsbeispielen weisen der Trägerstab 22 und/oder der Standstab 4 einen abweichenden Aussenquerschnitt auf. Um die Verdrehbarkeit des Trägerstabes 22 bzw. des Standstabes 4 trotzdem zu gewährleisten, weist dann der entsprechende Gelenkteil in seinem Klemmschellenteil Übergangselemente zu dem genannten Aussenquerschnitt auf. Einsetzbar ist dabei ein zumindest abschnittsweise ovaler Aussenquerschnitt, ein vieleckiger Aussenquerschnitt mit oder ohne Abrundung der Ecken oder ein Trägerstab und/oder Standstab, der zumindest abschnittsweise eine Längsnut aufweist. Im Ausführungsbeispiel sind - wie aus Figur 5 deutlich wird - gegenseitig übergreifende Zentrierhülsen 48 und 49 um das Zentrum der Drehscheiben 42 und 44 herum angeordnet.

An beiden Enden des Trägerstabes 22 sind, je gegenüberliegend, kurze Stützstreben 24, 24a mit ihrem einen Ende gelenkig angebracht und mit ihrem anderen Ende mit Gelenken im Mittelbereich von langen Spannstreben 26, 26a angeordnet. Die langen Spannstreben 26, 26a sind einerseits mit auf dem Trägerstab 22 laufenden Schiebern 28 gelenkig verbunden, während an den äusseren Enden der Spannstreben 26, 26a die Ecken 30, 30a der flexiblen Schutzfläche 32 befestigt sind. Die beiden gegenläufigen Schieber 28 sind mit einem gefederten Kipphebel 29 mit Klaue ausgestattet, welche bei aufgespanntem Dach an einer Raste einklinken. Durch Betätigung des Kipphebels 29 werden die Schieber 28 wieder gelöst und können zurückgeschoben werden. Diese Anordnung der Streben 24, 24a, 26, 26a bewirkt, dass sich die mit den Ecken 30, 30a der Schutzfläche 32 verbundenen Enden der Spannstreben 26, 26a nahezu rechtwinklig linear zum Trägerstab 22 bewegen und die Schutzfläche 32 in eine parallele Faltung 33 gelegt wird, was auch am geschlossenen Dach die ungehinderte Bedienung des Gelenkes 20 erlaubt. Vorteilhaft werden die langen Spannstreben 26,26a so angeordnet, dass in zusammengeklappter Stellung ihre äusseren Enden im Verhältnis zu den Enden des Trägerstabes 22 zurückgestuft angeordnet sind, um Überdehnungen der Schutzfläche 32 während dem Aufspann- oder Zusammenklapp-Vorgang zu vermeiden.

Im dargestellten Ausführungsbeispiel weist die Schutzfläche 32 Ecken 30, 30a auf, wobei die Ecken 30, 30a der Schutzfläche 32 an den Streben-Enden drehbar gelagert sind. Der Trägerstab 22 weist Führungsnuten 34 zur Verdrehsicherung der Schieber 28 auf. In den Führungsnuten 34 des Trägerstabes 22 sind Anschlagnocken 35 für die Endstellungen der Schieber 28 angeordnet. Zum Aufspannen und zum Zusammenklappen ist jeweils ein mit einer Feder versehener Kipphebel 29 mit Klaue 29a in den Schiebern 28 angebracht, welcher mit einer Gegenraste am Trägerstab 22 die ausgespannten Spannstreben 26, 26a in Position hält. Die langen Spannstreben 26, 26a sind mit gefederten Verlängerungen zum Spannungsausgleich versehen. Die äusseren Enden der langen Spannstreben 26, 26a sind in zusammengeklappter Stellung zurückliegend zum Trägerstabende 22a angeordnet, wodurch eine Vermeidung von Überdehnung von Teilen der Schutzfläche 32 erzielt wird. Im vorliegenden Ausführungsbeispiel sind die Streben mit Spreizfedern (alternativ: Abstand-Haltern) ausgestattet. Weiterhin weist die Schutzfläche 32 ein- oder beidseitig vom Verstellgelenk zusätzliche Befestigungen 25 zum Trägerstab 22 auf, der jeweils von einem Schutzring 25a begleitet ist.

### Bezuqszeichenliste

- 2: Standschirm
- 4: Standstab
- 6: unteres Teilrohr
- 8: oberes Teilrohr
- 9: erste Befestigungsvorrichtung
- 10: erster Klemmgriff
- 20: Gelenk
- 22: Trägerstab
- 22a: Trägerstabende
- 24: Stützstrebe
- 24a: Stützstrebe
- 25: zusätzliche Befestigungen
- 25a: Schutzring
- 26: Spannstrebe
- 26a: Spannstrebe
- 28: Schieber
- 29: Kipphebel
- 29a: Klaue
- 30: Ecke
- 30a: Ecke
- 32: Schutzfläche
- 33: Faltung
- 34: Führungsut
- 35: Anschlagnocken
- 40: Klemmgriff des Gelenks
- 42: Drehscheibe
- 43: integrierte Klemmschelle
- 44: Drehscheibe
- 45: integrierte Klemmschelle
- 46: Klemmbolzen
- 48: Zentrierhülse
- 49: Zentrierhülse

## Patentansprüche

1. Sonnen- und Wetterschutzvorrichtung, insbesondere Sonnenschirm (2), mit einem Standstab (4), einem Trägerstab (22) und einer flexiblen Schutzfläche (32), wobei die flexible Schutzfläche (32) am Trägerstab (22) angebracht ist, Standstab (4) und Trägerstab (22) durch eine Gelenkkombination (20) miteinander verbunden sind und durch Betätigung einer einzigen Klemmschraube (40) die Schutzfläche (32) gleichzeitig sowohl um die Achse des Standstabes (4) als auch um die Achse des Trägerstabes (22) gedreht und fixiert werden kann und gleichzeitig der Winkel zwischen Standstab (4) und Trägerstab (22) verstellbar und fixierbar ist,
**dadurch gekennzeichnet, dass**
die Gelenkkombination zwei Gelenkhälften mit Drehscheiben (42, 44) und integrierten Klemmschellen (43, 45) aufweist.

2. Sonnen- und Wetterschutzvorrichtung nach Anspruch 1, **dadurch gekennzeichnet, dass** die Klemmschellen (43, 45) jeweils mit einem einsetzbaren Klemmflügel schliessbar sind.

3. Sonnen- und Wetterschutzvorrichtung nach Anspruch 1 oder 2, **dadurch gekennzeichnet, dass** sich der Trägerstab (22) bei gelöster Klemmschraube (40) in seiner Achsrichtung verschieben lässt.

4. Sonnen- und Wetterschutzvorrichtung nach einem der Ansprüche 1 bis 3, **dadurch gekennzeichnet, dass** die Drehscheiben (42, 44) für die Verstellung des Winkels vom Standstab (4) zum Trägerstab (22) ineinander greifende Verzahnungen aufweisen.

5. Sonnen- und Wetterschutzvorrichtung nach einem der Ansprüche 1 bis 3, **dadurch gekennzeichnet, dass** die Drehscheiben (42, 44) für die Einstellung des Winkels vom Standstab (4) zum Trägerstab (22) als Konus ausgebildet sind.

6. Sonnen- und Wetterschutzvorrichtung nach einem der Ansprüche 1 bis 5, **dadurch gekennzeichnet, dass** der Trägerstab (22) in Form eines Rohrs ausgebildet ist.

7. Sonnen- und Wetterschutzvorrichtung nach einem der Ansprüche 1 bis 6, **dadurch gekennzeichnet, dass** der Trägerstab (22) zumindest abschnittsweise eine von einem kreisrunden Aussenquerschnitt abweichenden Aussenquerschnitt aufweist und dass zumindest ein Gelenkteil in seinem Klemmschellenteil (43) Übergangselemente zu dem genannten Aussenquerschnitt aufweist.

8. Sonnen- und Wetterschutzvorrichtung nach Anspruch 7, **dadurch gekennzeichnet, dass** der Trägerstab (22) zumindest abschnittsweise einen ovalen Aussenquerschnitt oder einen vieleckigen Aussenquerschnitt mit oder ohne Abrundung der Ecken aufweist.

9. Sonnen- und Wetterschutzvorrichtung nach einem der Ansprüche 1 bis 8, **dadurch gekennzeichnet, dass** der Trägerstab (22) zumindest abschnittsweise eine Längsnut aufweist und dass zumindest ein Gelenkteil in seinem Klemmschellenteil (43) Übergangselemente für die Längsnut aufweist.

10. Sonnen- und Wetterschutzvorrichtung nach einem der Ansprüche 1 bis 9, **dadurch gekennzeichnet, dass** der Standstab (4) in Form von Rohren ausgebildet ist.

11. Sonnen- und Wetterschutzvorrichtung nach einem der Ansprüche 1 bis 10, **dadurch gekennzeichnet, dass** der Standstab (4) zumindest abschnittsweise eine von einem kreisrunden Aussenquerschnitt abweichenden Aussenquerschnitt aufweist und dass zumindest ein Gelenkteil in seinem Klemmschellenteil (45) Übergangselemente zu dem genannten Aussenquerschnitt aufweist.

12. Sonnen- und Wetterschutzvorrichtung nach Anspruch 11, **dadurch gekennzeichnet, dass** der Standstab (4) zumindest abschnittsweise einen ovalen Aussenquerschnitt oder einen vieleckigen Aussenquerschnitt mit oder ohne Abrundung der Ecken aufweist.

13. Sonnen- und Wetterschutzvorrichtung nach einem der Ansprüche 1 bis 12, **dadurch gekennzeichnet, dass** der Standstab (4) zumindest abschnittsweise eine Längsnut aufweist und dass zumindest ein Gelenkteil in seinem Klemmschellenteil (45) Übergangselemente für die Längsnut aufweist.

14. Sonnen- und Wetterschutzvorrichtung nach einem der Ansprüche 1 bis 13, **dadurch gekennzeichnet, dass** der Standstab (4) zumindest zwei teleskopisch verschiebbare Profile (6, 8) aufweist.

15. Sonnen- und Wetterschutzvorrichtung nach einem der Ansprüche 1 bis 14, **gekennzeichnet durch** gegenseitig übergreifende Zentrierhülsen (48, 49), die um das Zentrum der Drehscheiben herum angeordnet sind

## Claims

1. A sun and weather protection device, particularly a parasol (2), with a standing rod (4), a support rod (22) and a flexible protecting surface (32), wherein the flexible protecting surface (32) is attached to the support rod (22) and wherein the standing rod (4) and the support rod (22) are connected to each other by means of a hinge combination (20) and wherein the protecting surface (32) can simultaneously be rotated about and fixed to both the axis of the standing rod (4) and the axis of the support rod (22) by actuating a single clamping screw (40), and wherein furthermore also the angle between the standing rod (4) and the support rod (22) can be adjusted and fixed,
**characterized in that**
the hinge combination comprises two hinge halves with rotating disks (42, 44) and integrated gripper clamps (43, 45).

2. The sun and weather protection device according to claim 1, **characterized in that** the gripper clamps (43, 45) are closable by means of an insertable clamping wing.

3. The sun and weather protection device according to claim 1 or 2, **characterized in that** the support rod (22) is slidingly movable in its axis direction when the clamping screw is released (40).

4. The sun and weather protection device according to one of claims 1 to 3, **characterized in that** the rotating disks (42, 44) comprise mutually engaging indentations for adjusting the angle between the standing rod (4) and the support rod (22).

5. The sun and weather protection device according to one of claims 1 to 3, **characterized in that** the rotating disks (42, 44) for adjusting the angle between the standing rod (4) and the support rod (22) are conically shaped.

6. The sun and weather protection device according to one of claims 1 to 5, **characterized in that** the support rod (22) is configured with a tubular shape.

7. The sun and weather protection device according to one of claims 1 to 6, **characterized in that** the support rod (22) has an outer cross section deviating at least sectionwise from a circular outer cross section and that at least one hinge part comprises in its gripper clamp part (43) adaptor elements to said outer cross section.

8. The sun and weather protection device according to claim 7, **characterized in that** the support rod (22) has at least sectionwise an oval outer cross section or a polygonal outer cross section with or without rounded corners.

9. The sun and weather protection device according to one of claims 1 to 8, **characterized in that** the support rod (22) comprises at least sectionwise a longitudinal nut and that at least one hinge part comprises in its gripper clamp part (43) adaptor elements for the longitudinal nut.

10. The sun and weather protection device according to one of claims 1 to 9, **characterized in that** the standing rod (4) is configured with tubular shapes.

11. The sun and weather protection device according to one of claims 1 to 10, **characterized in that** the standing rod (4) has an outer cross section deviating at least sectionwise from a circular outer cross section and that at least one hinge part comprises in its gripper clamp part (45) adaptor elements to said outer cross section.

12. The sun and weather protection device according to claim 11, **characterized in that** the standing rod (4) has at least sectionwise an oval outer cross section or a polygonal outer cross section with or without rounded corners.

13. The sun and weather protection device according to one of claims 1 to 12, **characterized in that** the standing rod (4) comprises at least sectionwise a longitudinal nut and that at least one hinge part comprises in its gripper clamp part (45) adaptor elements for the longitudinal nut.

14. The sun and weather protection device according to one of claims 1 to 13, **characterized in that** the standing rod (4) comprises at least two telescopically sliding profiles (6, 8).

15. The sun and weather protection device according to one of claims 1 to 14, **characterized in** having mutually overlapping centering sleeves (48, 49) which are arranged around the center of the rotating disks.

## Revendications

1. Dispositif de protection contre le soleil et les intempéries, en particulier parasol (2) comprenant un montant de déploiement (4), une tige de support (22) et une surface de protection flexible (32), la surface de protection flexible (32) étant montée sur la tige de support (22), le montant (4) et la tige de support (22) étant reliés par un ensemble articulé (20), et V actionnement d'une seule vis de serrage (40) permettant de déplacer en rotation la surface de protection (32) simultanément autour de l'axe du montant (4) et autour de l'axe de la tige de support (22) et de la fixer et, simultanément de régler et de fixer l'angle entre le montant (4) et la tige de support (22),
**caractérisé en ce que**
l'ensemble articulé comporte deux demi-articulations équipées de disques rotatifs (42, 44) et de colliers de serrage (43, 45) intégrés.

2. Dispositif de protection contre le soleil et les intempéries conforme à la revendication 1,
**caractérisé en ce que**
les colliers de serrage (43, 45) peuvent respectivement être fermés par une ailette de serrage insérable.

3. Dispositif de protection contre le soleil et les intempéries conforme à la revendication 1 ou 2,
**caractérisé en ce que**
lorsque la vis de serrage (40) est desserrée, la tige de support (22) peut être déplacée en translation dans sa direction axiale.

4. Dispositif de protection contre le soleil et les intempéries conforme à l'une des revendications 1 à 3,
**caractérisé en ce que**
les disques rotatifs (42, 44) comportent des dentures engrenant l'une dans l'autre pour permettre le réglage de l'angle entre le montant (4) et la tige de support (22).

5. Dispositif de protection contre le soleil et les intempéries conforme à l'une des revendications 1 à 3,
**caractérisé en ce que**
pour permettre le réglage de l'angle entre le montant (4) et la tige de support (22) les disques rotatifs (42, 44) sont réalisés sous la forme de cônes.

6. Dispositif de protection contre le soleil et les intempéries conforme à l'une des revendications 1 à 5,
**caractérisé en ce que**
la tige de support (22) est réalisée sous la forme d'un tube.

7. Dispositif de protection contre le soleil et les intempéries conforme à l'une des revendications 1 à 6,
**caractérisé en ce que**
la tige de support (22) comporte, au moins par segment, une section externe différente d'une section externe circulaire, et au moins une partie d'articulation comporte, dans sa partie de collier de serrage (43), des éléments de transition vers cette section externe.

8. Dispositif de protection contre le soleil et les intempéries conforme à la revendication 7,
**caractérisé en ce que**
la tige de support (22) a au moins, par segment, une section externe ovale ou une section externe polygonale avec ou sans arrondis au niveau des angles.

9. Dispositif de protection contre le soleil et les intempéries conforme à l'une des revendications 1 à 8,
**caractérisé en ce que**
la tige de support (22) comporte au moins par segment une rainure longitudinale, et au moins une partie d'articulation comporte, dans sa partie de collier de serrage (43) des éléments de transition pour la rainure longi tudinale.

10. Dispositif de protection contre le soleil et les intempéries conforme à l'une des revendications 1 à 9,
**caractérisé en ce que**
le montant (4) est réalisé en forme de tubes.

11. Dispositif de protection contre le soleil et les intempéries conforme à l'une des revendications 1 à 10,
**caractérisé en ce que**
le montant (4) a, au moins par segment, une section extérieure différente d'une section extérieure circulaire, et au moins une partie d'articulation comporte, dans sa partie de collier de serrage (45), des éléments de transition vers cette section extérieure.

12. Dispositif de protection contre le soleil et les intempéries conforme à la revendication 11,
**caractérisé en ce que**
le montant (4) a, au moins par segment, une section externe ovale ou une section externe polygonale avec ou sans arrondi : au niveau de ses angles.

13. Dispositif de protection contre le soleil et les intempéries conforme à l'une des revendications 1 à 12,
**caractérisé en ce que**
le montant (4) comporte, au moins par segment, une fente longitudinale, et au moins une partie d'articulation comporte, dans sa partie de collier de serrage (45) des éléments de transition pour la rainure longitudinale.

14. Dispositif de protection contre le soleil et les intempéries conforme à l'une des revendications 1 à 13,
**caractérisé en ce que**
le montant (4) comporte au moins deux profilés (6, 8) coulissant télescopiquement.

15. Dispositif de protection contre le soleil et les intempéries conforme à l'une des revendications 1 à 14,
**caractérisé par**
des manchons de centrage (48, 49) venant en prise l'un sur l'autre qui sont montés autour du centre des disques rotatifs.
